# EUROPÄISCHE PATENTSCHRIFT

(11) **EP 3 851 404 B1**
(45) Veröffentlichungstag und Bekanntmachung des Hinweises auf die Patenterteilung: **08.02.2023**
(21) Anmeldenummer: 20212992.0
(22) Anmeldetag: 10.12.2020
(51) Int. Cl.: B66C 3/00, E02F 3/36

(54) **LADEKRANWECHSLER**
LOADING CRANE CHANGER
CHANGEUR DE GRUE DE CHARGEMENT

(30) Priorität: 13.01.2020 DE 102020100519
(43) Veröffentlichungstag der Anmeldung: 21.07.2021
(73) Patentinhaber: OilQuick Deutschland KG, 82297 Steindorf (DE)
(72) Erfinder: STÖSSL, Martin, 85132 Rupertsbuch Schernfeld (DE); KOLLMANN, Michael, 86492 Egling an der Paar (DE)
(74) Vertreter: Charrier Rapp & Liebau

(56) Entgegenhaltungen:
- WO-A1-83/03629
- DE-C1- 3 135 150

## Beschreibung

Die Erfindung betrifft eine Vorrichtung zum Wechseln von Arbeitsgeräten an einem Ladekran nach dem Oberbegriff des Anspruchs 1.

Ladekräne werden u.a. dafür eingesetzt, Transportfahrzeuge oder Anhänger mit Ladegut zu beladen. Dabei kann es sich um stationäre oder mobile Ladekräne handeln. Oft sind Ladekräne dabei unmittelbar mit dem Transportfahrzeug oder Anhänger verbunden.

Bei Ladekranladearbeiten kann es sich z.B. um das Laden von geschlagenem Holzstämmen oder Astabfällen in einem Forstbetrieb, zum Laden von palettiertem oder in Säcken bevorratetem Ladegut oder zum Laden von Stangengut in einem Baustellen- oder Logistikbetrieb handeln. Die Unterschiedlichkeit der Ladegüter erfordert an das Ladegut angepasste Arbeitsgeräte bzw. Ladegreifer wie z.B. zangenartige, klauenartige oder gabelartige Werkzeuge mit oder ohne Drehantrieb (Rotator) zum Ausrichten des Ladegreifers gegenüber dem zu greifenden Ladegut. Dies erfordert mitunter häufige Wechsel des am Ladekran befindlichen Arbeitsgeräts bzw. Ladegreifers. Um den Wechsel der Arbeitsgeräte zu vereinfachen werden diverse Schnellkupplungen eingesetzt.

Aus der DE 3 135 150 C1 ist eine gattungsgemäße Schnellkupplung zum Ankuppeln von Arbeitsgeräten an Stiele von Hydraulikbaggern bekannt. Die bekannte Schnellkupplung enthält einen im Wesentlichen rotationssymmetrischen, ladekranseitigen Kupplungsteil, der über ein als Zapfen ausgebildetes Führungsteil in eine entsprechende topfartige Aufnahme eines arbeitsgeräteseitigen Kupplungsteils eingefahren wird und über ein hydraulisch betätigbare Verriegelung formschlüssig gehalten werden kann. Zur Verriegelung bzw. formschlüssigen Halterung der Kupplungsteile fährt ein am arbeitsgeräteseitigen Kupplungsteil verschiebbar angeordnetes, bolzenförmiges Verriegelungselement in eine als Querbohrung im zapfenförmigen Führungsteil des ladekranseitigen Kupplungsteils ausgebildete Aufnahme ein.

Derartige Schnellkupplungen gewährleisten einen zügigen Wechsel von Arbeitsgeräten, wobei anwenderseitig das Bedürfnis nach einer möglichst direkten Kraftübertragung und spielfreien Verbindung zwischen Ladekran und Arbeitsgerät besteht.

Aufgabe der Erfindung ist es, eine entsprechende Vorrichtung bereitzustellen, bei welcher die Kraftübertragung und Verbindung zwischen Ladekran und Arbeitsgerät verbessert werden kann.

Diese Aufgabe wird durch eine Vorrichtung zum Wechseln von Arbeitsgeräten an einem Ladekran mit den Merkmalen des Anspruchs 1 gelöst. Zweckmäßige Ausgestaltungen und vorteilhafte Weiterbildungen der Erfindung sind in den Unteransprüchen angegeben.

Die erfindungsgemäße Vorrichtung zum Wechseln von Arbeitsgeräten an einem Ladekran enthält einen arbeitsgeräteseitigen oder ladekranseitigen ersten Kupplungsteil mit einer Aufnahmeöffnung und einen ladekranseitigen bzw. arbeitsgeräteseitigen zweiten Kupplungsteil mit einem entlang einer Längsachse verlaufenden und durch Zusammenbewegung des ersten Kupplungsteil und des zweiten Kupplungsteils in Richtung der Längsachse mit der Aufnahmeöffnung des ersten Kupplungsteils in Eingriff bringbaren Führungsteil. Der erste Kupplungsteil weist eine Stützfläche zur axialen Anlage des zweiten Kupplungsteils und der zweite Kupplungsteil eine zu der Stützfläche korrespondierende Auflagefläche und mindestens ein mittels eines Antriebs quer zur Längsachse des zweiten Kupplungsteils zwischen einer Lösestellung und einer Haltestellung bewegliches Verriegelungselement auf. Das Verriegelungselement enthält eine Spannfläche zur kraftschlüssigen Anlage am ersten Kupplungsteil. Der erste Kupplungsteil weist eine zur Spannfläche korrespondierende Anlagefläche zur spielfreien, axialen Verspannung von erstem Kupplungsteil und zweitem Kupplungsteil auf. Durch das Zusammenwirken von Spannfläche und Anlagefläche wird eine axiale Verspannung und direkte Kraftübertragung ermöglicht, so dass der zweite Kupplungsteil spielfrei mit bzw. von dem ersten Kupplungsteil gekoppelt und mit diesem bewegt werden kann. Dadurch lassen sich präzise Bewegungen des Arbeitsgerätes ausführen und eine hohe Positioniergenauigkeit des Arbeitsgeräts erreichen. Weiterhin kann der vibrationsbedingte Verschleiß bzw. Abrieb an berührenden Oberflächen von erstem und zweitem Kupplungsteil verringert werden. Durch die axiale Verspannung wird außerdem eine eindeutige Lastaufnahme für Momente erreicht, da Momente reibkraftschlüssig über die Stützfläche und Anlagefläche übertragen werden können, so dass insbesondere die Verriegelungselemente keine Momente übertragen müssen.

Vorzugsweise sind der erste Kupplungsteil am Arbeitsgerät und der zweite Kupplungsteil am Ladekran angeordnet. Im Sinne der Erfindung sind Ladekranseite und Arbeitsgeräteseite jedoch als austauschbar zu betrachten. Der erste Kupplungsteil könnte auch am Ladekran und der zweite Kupplungsteil am Arbeitsgerät angeordnet sein.

In einer besonders bevorzugten Ausführung sind die Spannfläche am Verriegelungselement und die Anlagefläche am ersten Kupplungsteil als zueinander korrespondierende Schrägflächen mit einem einander entsprechenden Neigungswinkel ausgebildet. Dadurch kann eine besonders gute Keilwirkung zur Erzeugung einer axialen Einzugskraft erreicht werden. An dem Verriegelungselement kann außerdem eine zusätzliche Spannfläche als Reservespannfläche vorgesehen sein. Diese kann durch entsprechende Drehung des Verriegelungselements um seine Längsachse zum Einsatz kommen.

Die Stützfläche am ersten Kupplungsteil und die dazugehörige Auflagefläche am zweiten Kupplungsteil sind zweckmäßigerweise als konische Flächen ausgeführt. Dadurch kann eine optimale Auflagefläche und genaue Ausrichtung bzw. Zentrierung der beiden Kupplungsteile beim Zusammenfügen erreicht werden. Die Stützfläche und die Auflagefläche können z.B. unter einem Winkel von 20 bis 50°, vorzugsweise 30°, gegenüber der Mittelachse des ersten Kupplungsteils bzw. der Längsachse des zweiten Kupplungsteils geneigt sein. Die Stützfläche und Auflagefläche können aber auch als Planflächen ausgeführt sein.

Die Paarung von Spannfläche am Verriegelungselement und Anlagefläche am ersten Kupplungsteil kann zweckmäßigerweise zur selbsthemmenden Fixierung des Verriegelungselements in der Haltestellung ausgebildet sein. Dadurch kann verhindert werden, dass sich das Verriegelungselement in der gekoppelten und verriegelten Stellung der beiden Kupplungsteile selbstständig löst. Eine Selbsthemmung kann durch geeignete Wahl der Neigung von Spannfläche und Anlagefläche erreicht werden. In einer möglichen Ausführung kann die Spannfläche unter einen Winkel β von ca. 30° gegenüber der Längsachse des Verriegelungselements geneigt sein. Die zu der Spannfläche korrespondierende Anlagefläche am ersten Kupplungsteil kann ebenfalls unter einem Winkel von 30° gegenüber einer zur Mittelachse des ersten Kupplungsteils rechtwinkligen Achse geneigt sein.

In einer vorteilhaften Ausführung weist der erste Kupplungsteil einen topfförmigen Grundkörper mit einer Mittelachse und einer zur Mittelachse konzentrischen kreisrunden Aufnahmeöffnung auf. Der zweite Kupplungsteil kann ein scheibenförmiges Oberteil und ein sich entlang der Längsachse erstreckendes zylindrisches Führungsteil zum Eingriff in die Aufnahmeöffnung des ersten Kupplungsteils enthalten.

Vorzugsweise sind an dem Führungsteil des zweiten Kupplungsteils und an der Aufnahmeöffnung des ersten Kupplungsteils mindestens ein Positionier- und Ausrichtelement zur Winkelpositionierung der beiden Kupplungsteile angeordnet. Dadurch wird eine definierte Winkellage für den Eingriff des Führungsteils in die Aufnahmeöffnung des ersten Kupplungsteils vorgegeben. Es kann somit sichergestellt werden, dass eine korrekte Kupplung am ersten Kupplungsteil angeordneter Steckanschlüsse mit den entsprechenden Gegenanschlüssen am zweiten Kupplungsteil erfolgt. Außerdem kann dadurch eine Verdrehsicherung gegen ungewollte Verdrehung von ersten und zweiten Kupplungsteil geschaffen werden.

An dem zweiten Kupplungsteil sind zweckmäßigerweise zwei diametral gegenüberliegende Verriegelungselemente angeordnet. Dadurch wird eine zentrische Spannung und gleichmäßige Kraftverteilung erreicht. Es können aber auch nur ein Verriegelungselement oder mehr als zwei Verriegelungselemente vorgesehen sein. Durch den Einsatz mehrerer Verriegelungselemente kann die relative Belastung eines Verriegelungselements gegenüber einer Ausführung mit nur einem Verriegelungselement gesenkt werden. Auch ist dadurch eine gleichmäßigere Kraftverteilung möglich.

An dem ersten oder zweiten Kupplungsteil können in weitere vorteilhafter Weise geeignete Dämpfungselemente zur Dämpfung von Stößen beim Zusammenfahren der beiden Kupplungsteile angeordnet sein. Durch die Dämpfungselemente können stoßbedingte Beschädigungen vermieden werden. Die zweckmäßigerweise zwischen dem ersten und zweiten Kupplungsteil angeordneten Dämpfungselemente können z.B. als elastisch verformbare Elastomerblöcke ausgebildet sein. Auch Federn oder anders ausgeführte Dämpfungselemente sind möglich.

Der Antrieb zur Verschiebung des mindestens einen Verriegelungselements kann vorzugsweise als hydraulischer Antrieb mit einem innerhalb eines Kolbenraums verschiebbaren Kolbens ausgebildet sein. Es kann aber auch ein pneumatischer, elektrischer oder sonstiger Antrieb zum Einsatz kommen. Der vorzugsweise beidseitig beaufschlagbare Kolben und eine Durchgangsöffnung innerhalb des Führungsteils zur axialen Führung des Kolbens können zweckmäßigerweise einen unrunden Querschnitt aufweisen. Durch einen unrunden Querschnitt kann eine Winkellage des Verriegelungselements in der Führung eindeutig festgelegt und gegen Verdrehung gesichert werden. Dadurch kann auf einfache Weise gewährleistet werden, dass sich die Spannfläche am Verriegelungselement immer an der korrekten Position befindet. Der Querschnitt kann z.B. leicht elliptisch oder auch vieleckig z.B. in Form eines Sechskants oder Oktaeders ausgeführt sein. Auch andere Verdrehsicherungen sind möglich.

In einer besonders vorteilhaften Weise kann das Verriegelungselement einteilig mit dem Kolben ausgeführt sein. Dadurch kann der Antrieb vereinfacht werden.

In einer weiteren vorteilhaften Ausführung kann an dem ersten Kupplungsteil oder dem zweiten Kupplungsteil eine Sichtanzeige zur Überwachung der korrekten Verriegelung angeordnet sein.

An dem ersten Kupplungsteil und dem zweiten Kupplungsteil können zueinander passende Versorgungskupplungen, insb. in Form einer Energieversorgerkupplung oder einer hydraulischen Schnellkupplung angeordnet sein. Damit kann insbesondere das Arbeitsgerät mit Hydraulikflüssigkeit und/oder Strom versorgt werden. Alternativ oder zusätzlich möglich ist auch, hydraulische Aktuatoren oder Energieverbraucher im oder am zweiten Kupplungsteil anzubinden, z.B. in Form eines am zweiten Kupplungsteil angebrachten oder im zweiten Kupplungsteil integrierten Drehantriebs (Rotator), mit welchem ein Arbeitsgerät bzgl. der Kopplungsachse gedreht werden kann. Bei dem hydraulischen Aktuator oder Energieverbraucher kann es sich beispielsweise aber auch um ein zusätzlich im zweiten Kupplungsteil integriertes Verriegelungselement zum form- oder reibkraftschlüssigen Verbinden von erstem und zweitem Kupplungsteil handeln.

Weitere Besonderheiten und Vorzüge der Erfindung ergeben sich aus der folgenden Beschreibung eines bevorzugten Ausführungsbeispiels anhand der Zeichnung. Es zeigen:
- **Fig. 1**: eine Perspektivansicht zweier Kupplungsteile einer Vorrichtung zum Wechseln von Arbeitsgeräten in einem noch nicht gekoppelten Zustand;
- **Fig. 2**: eine Schnittansicht der beiden Kupplungsteile im noch nicht gekoppelten Zustand;
- **Fig. 3**: eine Schnittansicht der beiden Kupplungsteile im gekoppelten Zustand;
- **Fig. 4**: einen Kolben mit integriertem Verriegelungselement in einer Perspektive;
- **Fig. 5**: den Kolben von Figur 4 in einer Seitenansicht und
- **Fig. 6**: den Kolben von Figur 4 in einer Vorderansicht.

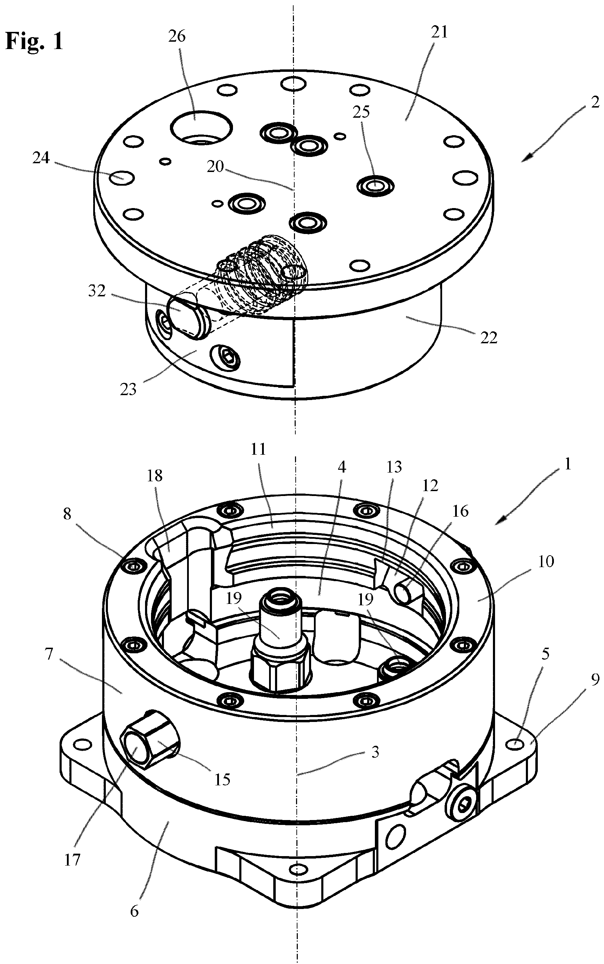

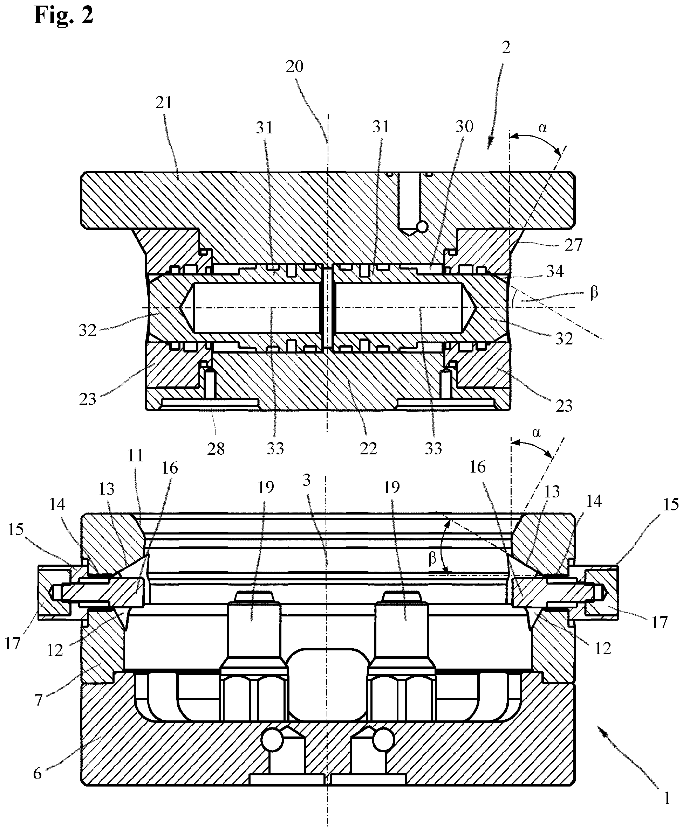

In den Figuren 1 und 2 ist eine Perspektivansicht und eine Schnittansicht einer erfindungsgemäßen Vorrichtung zum Wechseln vom Arbeitsgeräten an einem Ladekran mit einem arbeitsgeräteseitigen ersten Kupplungsteil 1 und einem ladekranseitigen zweiten Kupplungsteil 2 in einem noch nicht gekuppelten Zustand gezeigt.

Der an einem Arbeitsgerät befestigbare erste Kupplungsteil 1 weist einen topfförmigen Grundkörper mit einer Mittelachse 3 und einer zur Mittelachse 3 konzentrischen kreisrunden Aufnahmeöffnung 4 auf. Der topfförmige Grundkörper besteht bei der gezeigten Ausführung aus einem mit flanschartigen Anschlussteilen 5 versehenen plattenförmigen Unterteil 6 und einem ringförmigen Oberteil 7, das die kreisrunde Aufnahmeöffnung 3 begrenzt. Das ringförmige Oberteil 7 ist über Schrauben 8 auf dem plattenförmigen Unterteil 6 befestigt. Über Bohrungen 9 in den Anschlussteilen 5 ist das plattenförmige Unterteil 5 auf einer Schaufel, einer Gabel oder einem anderen Arbeitsgerät montierbar. Das ringförmige Oberteil weist eine ringförmige obere Stirnfläche 10 und im oberen Bereich der Aufnahmeöffnung 3 eine hier konisch ausgebildete Stützfläche 11 zur Auflage des zweiten Kupplungsteils 2 auf.

Wie besonders aus Figur 2 hervorgeht, sind an der Innenseite des ringförmigen Oberteils 7 zwei diametral gegenüberliegende Vertiefungen 12 mit einer nach unten weisenden, geneigten Anlagefläche 13 angeordnet. Innerhalb zweier in Querbohrungen 14 im Bereich der Vertiefungen 12 eingeschraubter Führungshülsen 15 sind ferner durch eine Feder nach innen vorgespannte, nach innen ragende Betätigungsbolzen 16 radial verschiebbar geführt. Auf dem gegenüber dem Oberteil 7 nach außen vorstehenden Ende der Betätigungsbolzens 16 ist ein innerhalb der Führungshülse 15 verschiebbarer Sichtbolzen 17 befestigt. Durch die beiden radial verschiebbaren Betätigungsbolzen 16 mit den Sichtbolzen 17 wird eine Sichtanzeige zur Überwachung der korrekten Verriegelung geschaffen. An der Innenseite des ringförmigen Oberteils 7 ist ferner ein in Figur 1 erkennbares Positionierelement 18 in Form einer Längsnut mit einem Rechteckquerschnitt angeordnet. Das als Längsnut ausgebildete Positionierelement 18 ist in Umfangsrichtung des Oberteils um 90° versetzt zu den Vertiefungen 12 angeordnet und dient als Positionierhilfe für die ordnungsgemäße Einführung des zweiten Kupplungsteils 2. Auf dem plattenförmigen Unterteil 6 des ersten Kupplungsteils 1 sind in die Aufnahmeöffnung 3 ragende Steckanschlüsse 19 zur Verbindung mit entsprechenden Gegenanschlüssen am zweiten Kupplungsteil 2 angeordnet. Dadurch können die Arbeitsgeräte z.B. mit Hydraulikfluid oder einem anderen Energieträger versorgt werden. Die Kupplungsanschlüsse 19 können auch zur Übertragung von elektrischer Energie oder elektrischen Signalen zur Überwachung oder Steuerung ausgebildet sein.

Der mit dem ersten Kupplungsteil 1 koppelbare zweite Kupplungsteil 2 enthält einen abgestuften zylindrischen Grundkörper mit einer Längsachse 20. In der gezeigten Ausführung weist der Grundkörper des zweiten Kupplungsteils 2 ein scheibenförmiges Oberteil 21 und ein sich entlang der Längsachse 20 erstreckendes zylindrisches Führungsteil 22 mit zwei gegenüberliegenden Abdeckungen 23 zur Eingriff in die Aufnahmeöffnung 3 des ersten Kupplungsteils 1 auf. Das scheibenförmige Oberteil 21 und das zylindrische Führungsteil 22 können einteilig als zusammenhängendes Bauteil ausgeführt sein. Sie können aber auch als separate und z.B. über Schrauben fest miteinander verbindbare Teile ausgebildet sein.

In dem hier als Kreisscheibe ausgeführten Oberteil 21 des zweiten Kupplungsteils 2 sind Bohrungen 24 zur Befestigung an einem Ladekran bzw. einem Drehantrieb angeordnet. Außerdem sind in dem Oberteil 21 mehrere Anschlüsse 25 und 26 für die Versorgung mit Hydraulikfluid oder dgl. vorgesehen. In dem Oberteil 21 können auch andere Anschlüsse für eine elektrische Energieversorgung oder für die Weiterleitung von Steuersignalen angeordnet sein.

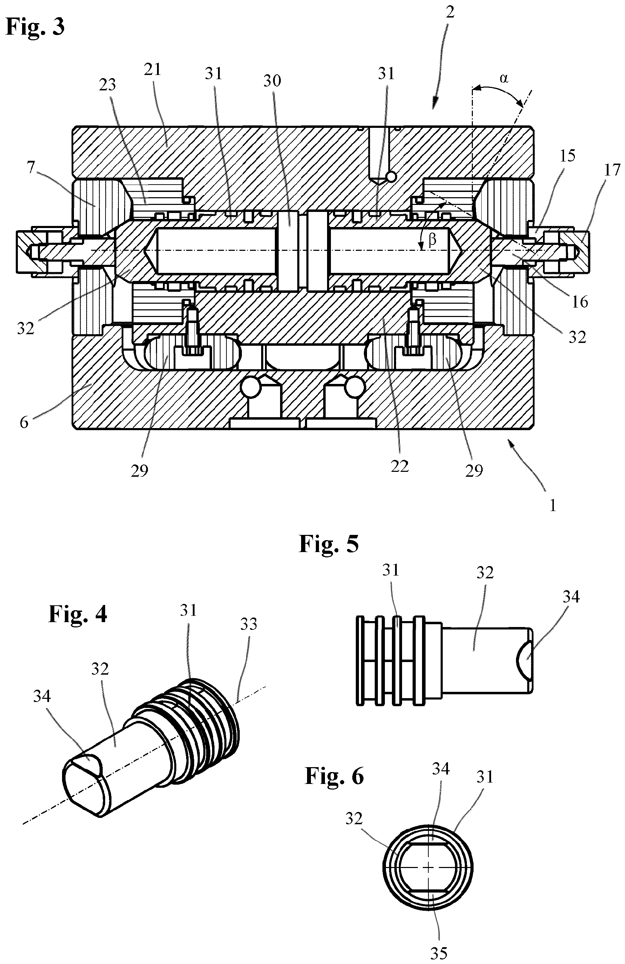

Das hier als Zylinder ausgebildete Führungsteil 22 ist von der Form und den Abmessungen an die Aufnahmeöffnung 3 des ersten Kupplungsteils 1 angepasst. An dem Führungsteil 22 und den Abdeckungen 23 ist eine in Figur 2 erkennbare konische Auflagefläche 27 zur Anlage an der konischen Stützfläche 11 des ersten Kupplungsteils 1 vorgesehen. Die konische Auflagefläche 27 am zweiten Kupplungsteil 2 und die dazugehörige Stützfläche 11 am ersten Kupplungsteil 1 weisen dieselbe Neigung auf und sind bei der gezeigten Ausführung unter einem Winkel α von 30° gegenüber den Längsachsen 3 bzw. 20 und geneigt. Dadurch wird einerseits eine Zentrierung beim Zusammenfügen und andrerseits eine zentrierte und positionsgenaue Verbindung von ersten und zweiten Kupplungsteil 1 und 2 erreicht. An der Außenseite des Führungsteils 22 ist außerdem ein in der Zeichnung nicht dargestelltes, als Ansatz ausgebildetes Ausrichtelement zum Eingriff in das hier als Längsnut ausgeführtes Positionierelement 18 des ersten Kupplungsteils 1 angeordnet. Durch den Ansatz am Führungsteil 22 und die zugehörige Längsnut wird eine definierte Einführstellung für den Eingriff des Führungsteils 22 in die Aufnahmeöffnung 4 des ersten Kupplungsteils 1 vorgegeben. Dadurch kann eine korrekte Kupplung der am ersten Kupplungsteil 1 angeordneten Steckanschlüsse 19 mit den entsprechenden Gegenanschlüssen am zweiten Kupplungsteil 2 gewährleistet werden. An der Unterseite des Führungsteils 22 befinden sich zusätzliche Aufnahmen 28 für mehrere in Figur 3 dargestellte Dämpfungselemente 29.

In einer rechtwinklig zur Längsachse 20 verlaufenden Durchgangsöffnung 30 im Führungsteil 22 sind zwei in den Figuren 4 bis 6 gesondert dargestellte Kolben 31 quer zur Längsachse 20 verschiebbar geführt. An den beiden voneinander abgewandten Seiten der Kolben 31 ist jeweils ein bolzenförmiges Verriegelungselement 32 zum Eingriff in die Vertiefungen 12 des ersten Kupplungselements 1 angeformt. Wie aus Figur 4 hervorgeht, weisen die Kolben 31 und die bolzenförmige Verriegelungselemente 32 eine gemeinsame Längsachse 33 auf. Durch die Durchgangsöffnung 30 und die beiden seitlichen Abdeckungen 23 wird ein Kolbenraum begrenzt, in dem die beiden Kolben 31 hydraulisch zwischen einer in Figur 2 gezeigten zusammengefahrenen Stellung und einer in Figur 3 dargestellten auseinandergefahrenen Stellung bewegbar sind. Durch den von der Durchgangsöffnung 30 und den beiden Abdeckungen 23 begrenzten Kolbenraum und die beiden Kolben 31 mit entsprechenden Fluidzuführungen wird ein hier als hydraulischer Kolbenantrieb ausgeführter Antrieb geschaffen, durch den die beiden Verriegelungselemente 32 zwischen einer in Figur 2 dargestellten eingefahrenen Lösestellung und einer in Figur 3 dargestellten ausgefahrenen Haltestellung bewegbar sind. Für die Verschiebung der Verriegelungselemente 32 könnten aber auch elektromechanische, pneumatische oder sonstige Antriebe eingesetzt werden.

Bei dem gezeigten Ausführungsbeispiel sind an dem Führungsteil 22 zwei diametral gegenüberliegende Verriegelungselemente 32 vorgesehen. Dadurch ist eine gleichmäßige und zentrierte Spannung erreichbar. Es könnten aber auch nur ein Verriegelungselement oder mehr als zwei Verriegelungselemente verwendet werden. Die Längsachsen 32 der Kolben 31 mit den integrierten Verriegelungselementen 32 sind beim Ausführungsbeispiel rechtwinklig zur Längsachse 20 des zweiten Kupplungsteils 2 und zueinander koaxial angeordnet. In alternativen Ausführungsformen könnten die Kolben 31 bzw. die Verriegelungselemente 32 jedoch auch unter einem Winkel ungleich 90° gegenüber der Längsachse 20 des zweiten Kupplungsteils 2 bewegbar sein. Unter einer Bewegung der Verriegelungselemente 32 quer zur Längsachse 20 des zweiten Kupplungsteils 2 ist also nicht nur einer Bewegung unter einem rechten Winkel zur Längsachse zu verstehen. Das Verriegelungselement 32 könnte neben einer radialen Bewegungskomponente auch eine axiale Bewegungskomponente aufweisen.

Die Kolben 31 sind beim gezeigten Ausführungsbeispiel mit zueinander koaxialen Längsachsen 33 innerhalb des Führungsteils 22 angeordnet. Denkbar und möglich, ist es jedoch auch, ein oder mehrere Verriegelungselemente 32 andersartig anzuordnen, beispielsweise nicht paarweise diametral, sondern lateral versetzt bzgl. der Längsachse 20 und/oder mit gleichen oder entgegengesetzten Neigungswinkeln gegenüber der Längsachse 20.

In den Figuren 4 bis 6 ist ein Kolben 31 mit dem integrierten bolzenförmigen Verriegelungselement 32 in verschiedenen Ansichten gezeigt. An dem freien Enden des bolzenförmigen Verriegelungselements 32 ist eine hier als Schrägfläche ausgebildete Spannfläche 34 zur Anlage an der Anlagefläche 13 des ersten Kupplungsteils 1 angeordnet. Wie aus Figur 2 hervorgeht, ist die Spannfläche unter einem Winkel β von 30° gegenüber der Längsachse 33 geneigt. Auch die zur Spannfläche 34 korrespondierende Anlagefläche 13 weist eine Neigung mit dem Winkel β auf. Der Kolben 31 und die zugehörige Durchgangsöffnung 30 haben einen leicht unrunden Querschnitt, wodurch eine Verdrehung des Kolbens 31 verhindert werden kann. Dadurch kann sichergestellt werden, dass sich die Spannfläche 34 stets an der richtigen Position befindet. Bei der gezeigten Ausführung weisen die Kolben 31und die zugehörige Durchgangsöffnung 30 einen leicht elliptischen Querschnitt auf. Auf der zur Spannfläche 34 diametral gegenüberliegenden Seite kann an dem freien vorderen Ende des bolzenförmigen Verriegelungselements 32 eine zusätzliche Spannfläche 35 vorhanden sein. Diese zusätzliche Spannfläche 35 dient als Reservespannfläche und kann bei einem eventuellen Verschleiß durch Drehung des Kolbens 31 um 180° zum Einsatz gelangen.

Im Folgenden wird die Funktionsweise der vorstehend beschriebenen Vorrichtung erläutert:
Zur Kopplung werden die beiden Kupplungsteile 1 und 2 zunächst so ausgerichtet, dass die Längsachse 20 des zweiten Kupplungsteils 2 und die Mittelachse 3 des ersten Kupplungsteils 1 koaxial zueinander ausgerichtet sind. Der z.B. an einem Kranausleger oder einem Drehantrieb angeordnete zweite Kupplungsteil 2 wird außerdem um seine Längsachse 20 so gedreht, dass das am zweiten Kupplungsteil angeordnete Ausrichtelement mit dem hier als Längsnut ausgebildeten Positionierelement 18 fluchtet. Dann kann der zweite Kupplungsteil 2 entlang der Längsachse 20 unter Eingriff des zylindrischen Führungsteil 22 in die Aufnahmeöffnung 4 auf den ersten Führungsteil 1 zubewegt werden, bis der zweite Kupplungsteil 2 mit seiner unteren Auflagefläche 27 zur Auflage auf der Stützfläche 11 des ersten Kupplungsteils 1 gelangt. Durch die konische Ausgestaltung von Stützfläche 11 und Auflagefläche 27 wird eine genaue radiale und axiale Ausrichtung mit einer definierten Kopplungsposition erreicht. Über die an der Unterseite des zweiten Kupplungsteils 2 angeordneten Dämpfungselemente 29 können eventuell auftretende Stöße beim Koppeln der beiden Kupplungsteile 1 und 2 gedämpft oder abgefedert werden.

Wenn der zweite Kupplungsteil 2 mit seiner unteren Auflagefläche 27 auf der Stützfläche 11 des ersten Führungsteils 1 aufliegt, können die beiden Kolben 31 durch entsprechende Druckbeaufschlagung aus der in Figur 2 gezeigten Stellung auseinanderbewegt werden, so dass die beiden Verriegelungselemente 32 aus der in Figur 2 gezeigten eingezogenen Lösestellung radial nach außen in eine in Figur 3 dargestellte ausgefahrene Haltestellung bewegt werden. Dabei gelangen die oberen Spannflächen 34 der im zweiten Kupplungsteil 2 angeordneten Verriegelungselemente 32 zur Anlage an den unteren Anlageflächen 13 des ersten Kupplungsteil 1. Durch die Ausführung der Spannflächen 34 und der Anlageflächen 13 als Schrägflächen entsteht beim Ausfahren der Verriegelungselemente 32 eine Axialkraft, mit welcher der erste Kupplungsteil 1 gegen den zweiten Kupplungsteil 2 gezogen wird.

Beim Ausfahren der Verriegelungselemente 32 in die Haltestellung werden die in dem ersten Kupplungsteil 1 angeordneten Betätigungsbolzen 16 gemäß Figur 3 radial nach außen gedrückt, wodurch auch die Sichtbolzen 17 gegenüber der Führungshülse 15 radial nach außen gedrückt werden. Dadurch wird dem Bediener signalisiert, dass die Verriegelungselement 32 korrekt ausgefahren ist und der Kopplungsvorgang erfolgreich durchgeführt worden ist.

Zum Lösen der Verriegelung werden die beiden Kolben 31 durch entsprechende Druckbeaufschlagung wieder zusammengefahren. Dadurch werden auch die Verriegelungselemente 32 wieder aus dem Vertiefungen 12 des ersten Kupplungsteils 1 ausgerückt und in das zylindrische Führungsteil 22 eingefahren. Dadurch kann die Verbindung zwischen dem ersten und zweiten Kupplungsteil 1 bzw. 2 gelöst werden.

### Bezugszeichenliste

- 1: Erster Kupplungsteil
- 2: Zweiter Kupplungsteil
- 3: Mittelachse
- 4: Aufnahmeöffnung
- 5: Anschlussteil
- 6: Unterteil
- 7: Oberteil
- 8: Schrauben
- 9: Bohrung
- 10: Stirnfläche
- 11: Stützfläche
- 12: Vertiefung
- 13: Anlagefläche
- 14: Querbohrung
- 15: Führungshülse
- 16: Betätigungsbolzen
- 17: Sichtbolzen
- 18: Positionierelement
- 19: Kupplungsanschluss
- 20: Längsachse
- 21: Oberteil
- 22: Führungsteil
- 23: Abdeckung
- 24: Bohrung
- 25: Anschluss
- 26: Anschluss
- 27: Auflagefläche
- 28: Aufnahme
- 29: Dämpfungselement
- 30: Durchgangsöffnung
- 31: Kolben
- 32: Verriegelungselement
- 33: Kolbenlängsachse
- 34: Spannfläche
- 35: Zusätzliche Spannfläche

## Patentansprüche

1. Vorrichtung zum Wechseln von Arbeitsgeräten an einem Ladekran, die einen arbeitsgeräteseitigen oder ladekranseitigen ersten Kupplungsteil (1) mit einer Aufnahmeöffnung (4) und einen ladekranseitigen bzw. arbeitsgeräteseitigen zweiten Kupplungsteil (2) mit einem entlang einer Längsachse (20) verlaufenden und durch Zusammenbewegung des ersten Kupplungsteil (1) und des zweiten Kupplungsteils (2) in Richtung der Längsachse (20) mit der Aufnahmeöffnung (4) des ersten Kupplungsteils (1) in Eingriff bringbares Führungsteil (22) enthält, wobei der erste Kupplungsteil (1) eine Stützfläche (11) zur axialen Anlage des zweiten Kupplungsteils (2) und der zweite Kupplungsteil (2) eine zu der Stützfläche (11) korrespondierende Auflagefläche (27) und mindestens ein mittels eines Antriebs (23, 30, 31) quer zur Längsachse (20) des zweiten Kupplungsteils (2) zwischen einer Lösestellung und einer Haltestellung bewegliches Verriegelungselement (32) enthält, **dadurch gekennzeichnet, dass** das Verriegelungselement (32) eine Spannfläche (34) zur kraftschlüssigen Anlage am ersten Kupplungsteil (1) aufweist und dass der erste Kupplungsteil (1) eine zur Spannfläche (34) korrespondierende Anlagefläche (13) zur spielfreien, axialen Verspannung von erstem Kupplungsteil (1) und zweitem Kupplungsteil (2) enthält.

2. Vorrichtung nach Anspruch 1, **dadurch gekennzeichnet, dass** die Spannfläche (34) am Verriegelungselement (32) und die Anlagefläche (13) am ersten Kupplungsteil (1) als zueinander korrespondierende Schrägflächen mit einem einander entsprechenden Neigungswinkel ausgebildet sind.

3. Vorrichtung nach Anspruch 1 oder 2, **dadurch gekennzeichnet, dass** die Stützfläche (11) am ersten Kupplungsteil (1) und die dazugehörige Auflagefläche (27) am zweiten Kupplungsteil (2) als konische Flächen ausgeführt sind.

4. Vorrichtung nach einem der Ansprüche 1 bis 3, **dadurch gekennzeichnet, dass** die Paarung von Spannfläche (34) am Verriegelungselement (32) und Anlagefläche (13) am ersten Kupplungsteil (1) zur selbsthemmenden Fixierung des Verriegelungselements (32) in der Haltestellung ausgebildet ist.

5. Vorrichtung nach einem der Ansprüche 1 bis 4, **dadurch gekennzeichnet, dass** der erste Kupplungsteil (1) einen topfförmigen Grundkörper mit einer Mittelachse (3) und einer zur Mittelachse (3) konzentrischen kreisrunden Aufnahmeöffnung (4) aufweist.

6. Vorrichtung nach einem der Ansprüche 1 bis 5, **dadurch gekennzeichnet, dass** der zweite Kupplungsteil (2) ein scheibenförmiges Oberteil (21) und ein sich entlang der Längsachse (20) erstreckendes zylindrisches Führungsteil (22) zum Eingriff in die Aufnahmeöffnung (4) des ersten Kupplungsteils (1) enthält.

7. Vorrichtung nach einem der Ansprüche 1 bis 6, **dadurch gekennzeichnet, dass** an dem Führungsteil (22) des zweiten Kupplungsteils (2) und an der Aufnahmeöffnung (4) des ersten Kupplungsteils (1) mindestens ein Positionier- und Ausrichtelement zur Winkelpositionierung der beiden Kupplungsteile (1, 2) angeordnet ist.

8. Vorrichtung nach einem der Ansprüche 1 bis 7, **dadurch gekennzeichnet, dass** an dem zweiten Kupplungsteil (2) zwei diametral gegenüberliegende Verriegelungselemente (32) angeordnet sind.

9. Vorrichtung nach einem der Ansprüche 1 bis 8, **dadurch gekennzeichnet, dass** an dem ersten oder zweiten Kupplungsteil (1, 2) Dämpfungselemente (29) zur Dämpfung von Stößen beim Zusammenfahren der beiden Kupplungsteile (1, 2) angeordnet sind.

10. Vorrichtung nach einem der Ansprüche 1 bis 9, **dadurch gekennzeichnet, dass** der Antrieb (23, 30, 31) zur Verschiebung des mindestens einen Verriegelungselements (32) als hydraulischer Antrieb mit einem innerhalb eines Kolbenraums (23, 30) verschiebbaren Kolbens (31) ausgebildet ist.

11. Vorrichtung nach Anspruch 10, **dadurch gekennzeichnet, dass** der Kolbenraum (23, 30) durch eine Durchgangsöffnung (30) und zwei seitlichen Abdeckungen (23) am Führungsteil (22) begrenzt wird.

12. Vorrichtung nach Anspruch 11, **dadurch gekennzeichnet, dass** die Durchgangsöffnung (30) und der darin axial verschiebbare Kolben (31) einen unrunden Querschnitt aufweisen.

13. Vorrichtung nach einem der Ansprüche 10 bis 12, **dadurch gekennzeichnet, dass** das Verriegelungselement (32) einteilig mit dem Kolben (31) ausgebildet ist.

14. Vorrichtung nach einem der Ansprüche 1 bis 13, **dadurch gekennzeichnet, dass** an dem ersten Kupplungsteil (1) oder dem zweiten Kupplungsteil (2) eine Sichtanzeige (15, 16, 17) zur Überwachung der korrekten Verriegelung angeordnet ist.

## Claims

1. Device for changing work tools on a loading crane, comprising a first coupling member (1) on the work tool side or the loading crane side with a receiving opening (4) and a second coupling member (2) on the loading crane side or the work tool side with a guide member (22) extending along a longitudinal axis (20), which guide member (22) is engageable with the receiving opening (4) of the first coupling member (1) by movement of the first coupling member (1) and the second coupling member (2) towards each other in the direction of the longitudinal axis (20), wherein the first coupling member (1) comprises a support surface (11) for axial abutment of the second coupling member (2) and the second coupling member (2) comprises a bearing surface (27) corresponding to the support surface (11) and at least one locking element (32) which can be moved by means of a drive (23, 30, 31) transversely to the longitudinal axis (20) of the second coupling member (2) between a release position and a holding position, **characterized in that** the locking element (32) has a clamping surface (34) for frictionally abutting the first coupling member (1) and **in that** the first coupling member (1) has an abutment surface (13) corresponding to the clamping surface (34) for backlash-free axial clamping of the first coupling member (1) and the second coupling member (2).

2. Device according to claim 1, **characterized in that** the clamping surface (34) on the locking element (32) and the abutment surface (13) on the first coupling member (1) are designed as mutually corresponding inclined surfaces having a mutual angle of inclination.

3. Device according to claim 1 or 2, **characterized in that** the support surface (11) on the first coupling member (1) and the associated bearing surface (27) on the second coupling member (2) are designed as conical surfaces.

4. Device according to one of claims 1 to 3, **characterized in that** the pairing of clamping surface (34) on the locking element (32) and abutment surface (13) on the first coupling member (1) is designed for self-locking fixation of the locking element (32) in the holding position.

5. Device according to one of claims 1 to 4, **characterized in that** the first coupling member (1) has a cup-shaped main body with a central axis (3) and a circular receiving opening (4) concentric with the central axis (3).

6. Device according to one of claims 1 to 5, **characterized in that** the second coupling member (2) comprises a disk-shaped upper member (21) and a cylindrical guide member (22) extending along the longitudinal axis (20) for engagement in the receiving opening (4) of the first coupling member (1).

7. Device according to one of claims 1 to 6, **characterized in that** at least one positioning and aligning element is disposed on the guide member (22) of the second coupling member (2) and on the receiving opening (4) of the first coupling member (1) for the angular positioning of the two coupling members (1, 2).

8. Device according to one of claims 1 to 7, **characterized in that** two diametrically opposed locking elements (32) are disposed on the second coupling member (2).

9. Device according to one of claims 1 to 8, **characterized in that** damping elements (29) are disposed on the first or second coupling member (1, 2) for damping shocks when the two coupling members (1, 2) are being coupled to each other.

10. Device according to one of claims 1 to 9, **characterized in that** the drive (23, 30, 31) for moving the at least one locking element (32) is designed as a hydraulic drive with a piston (31) which is movable inside a piston chamber (23, 30).

11. Device according to claim 10, **characterized in that** the piston chamber (23, 30) is delimited by a through-opening (30) and two lateral covers (23) on the guide member (22).

12. Device according to claim 11, **characterized in that** the through-opening (30) and the piston (31) axially movable therein have a noncircular cross section.

13. Device according to one of claims 10 to 12, **characterized in that** the locking element (32) is integrally formed with the piston (31).

14. Device according to one of claims 1 to 13, **characterized in that** a visual indicator (15, 16, 17) for monitoring correct locking is disposed on the first coupling member (1) or on the second coupling member (2)

## Revendications

1. Dispositif de changement d'outils de travail sur une grue de chargement, qui contient une première partie de couplage (1) du côté de l'outil de travail ou du côté de la grue de chargement, avec une ouverture de réception (4) et une seconde partie de couplage (2) du côté de la grue de chargement ou du côté de l'outil de travail avec une partie de guidage (22) s'étendant le long d'un axe longitudinal (20) et pouvant être amenée en prise avec l'ouverture de réception (4) de la première partie de couplage (1) en déplaçant conjointement la première partie de couplage (1) et la seconde partie de couplage (2) en direction de l'axe longitudinal (20), dans lequel la première partie de couplage (1) contient une surface de soutien (11) destinée à l'appui axial de la seconde partie de couplage (2) et la seconde partie de couplage (2) contient une surface de support (27) correspondant à la surface de soutien (11) et au moins un élément de verrouillage (32) mobile entre une position de desserrage et une position de maintien au moyen d'un entraînement (23, 30, 31) de manière transversale par rapport à l'axe longitudinal (20) de la seconde partie de couplage (2), **caractérisé en ce que** l'élément de verrouillage (32) présente une surface de serrage (34) destinée à venir en appui à force sur la première partie de couplage (1), et que la première partie de couplage (1) contient une surface d'appui (13) correspondant à la surface de serrage (34) pour assembler par serrage axialement sans jeu la première partie de couplage (1) et la seconde partie de couplage (2).

2. Dispositif selon la revendication 1, **caractérisé en ce que** la surface de serrage (34) sur l'élément de verrouillage (32) et la surface d'appui (13) sur la première partie de couplage (1) sont réalisées en tant que surfaces obliques correspondant l'une par rapport à l'autre avec un angle d'inclinaison correspondant.

3. Dispositif selon la revendication 1 ou 2, **caractérisé en ce que** la surface de soutien (11) sur la première partie de couplage (1) et la surface de support (27) associée sur la seconde partie de couplage (2) sont réalisées en tant que surfaces coniques.

4. Dispositif selon l'une quelconque des revendications 1 à 3, **caractérisé en ce que** l'appariement de la surface de serrage (34) sur l'élément de verrouillage (32) et la surface d'appui (13) sur la première partie de couplage (1) est réalisé pour fixer de manière autobloquante l'élément de verrouillage (32) dans la position de maintien.

5. Dispositif selon l'une quelconque des revendications 1 à 4, **caractérisé en ce que** la première partie de couplage (1) présente un corps de base en forme de pot avec un axe central (3) et avec une ouverture de réception (4) ronde circulaire concentrique par rapport à l'axe central (3).

6. Dispositif selon l'une quelconque des revendications 1 à 5, **caractérisé en ce que** la seconde partie de couplage (2) contient une partie supérieure (21) en forme de disque et une partie de guidage (22) cylindrique s'étendant le long de l'axe longitudinal (20), destinée à venir en prise avec l'ouverture de réception (4) de la première partie de couplage (1).

7. Dispositif selon l'une quelconque des revendications 1 à 6, **caractérisé en ce qu'**au moins un élément de positionnement et d'orientation est disposé pour le positionnement angulaire des deux parties de couplage (1, 2) sur la partie de guidage (22) de la seconde partie de couplage (2) et sur l'ouverture de réception (4) de la première partie de couplage (1).

8. Dispositif selon l'une quelconque des revendications 1 à 7, **caractérisé en ce que** deux éléments de verrouillage (32) diamétralement opposés sont disposés sur la seconde partie de couplage (2).

9. Dispositif selon l'une quelconque des revendications 1 à 8, **caractérisé en ce que** des éléments d'amortissement (29) pour amortir des chocs lors du regroupement des deux parties de couplage (1, 2) sont disposés sur la première ou sur la seconde partie de couplage (1, 2).

10. Dispositif selon l'une quelconque des revendications 1 à 9, **caractérisé en ce que** l'entraînement (23, 30, 31) destiné à faire coulisser l'au moins un élément de verrouillage (32) est réalisé en tant qu'entraînement hydraulique avec un piston (31) pouvant être coulissé à l'intérieur d'une chambre de piston (23, 30).

11. Dispositif selon la revendication 10, **caractérisé en ce que** la chambre de piston (23, 30) est délimitée par une ouverture de passage (30) et deux recouvrements (23) latéraux sur la partie de guidage (22) .

12. Dispositif selon la revendication 11, **caractérisé en ce que** l'ouverture de passage (30) et le piston (31) pouvant y être coulissé axialement présentent une section transversale non ronde.

13. Dispositif selon l'une quelconque des revendications 10 à 12, **caractérisé en ce que** l'élément de verrouillage (32) est réalisé d'un seul tenant avec le piston (31).

14. Dispositif selon l'une quelconque des revendications 1 à 13, **caractérisé en ce qu'**une indication visuelle (15, 16, 17) destinée à surveiller le verrouillage en bonne et due forme est disposée sur la première partie de couplage (1) ou sur la seconde partie de couplage (2).
